(19) Europäisches Patentamt
European Patent Office
Office européen des brevets

(11) **EP 1 045 514 B1**

(12) **FASCICULE DE BREVET EUROPEEN**

(45) Date de publication et mention
de la délivrance du brevet:
**23.04.2008 Bulletin 2008/17**

(51) Int Cl.:
***H02P 21/00*** *(2006.01)*

(21) Numéro de dépôt: **00400886.8**

(22) Date de dépôt: **30.03.2000**

(54) **Procédé de régulation d'une machine tournante et dispositif d'alimentation d'une telle machine**

Regelungsprozess für eine drehende Maschine und Vorrichtung zur Versorgung dieser Maschine

Process for controlling a rotating machine and power supply for such a machine

(84) Etats contractants désignés:
**AT BE CH CY DE DK ES FI FR GB GR IE IT LI LU MC NL PT SE**

(30) Priorité: **13.04.1999 FR 9904602**

(43) Date de publication de la demande:
**18.10.2000 Bulletin 2000/42**

(73) Titulaire: **Alstom**
**92300 Levallois-Perret (FR)**

(72) Inventeurs:
• **Poullain, Serge**
**91290 Arpajon (FR)**
• **Thomas, Jean-Luc**
**77810 Thomery (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
**US-A- 4 724 373** **US-A- 5 777 452**

• **PATENT ABSTRACTS OF JAPAN vol. 1997, no. 12, 25 décembre 1997 (1997-12-25) & JP 09 224399 A (NIPPON SOKEN INC;TOYOTA MOTOR CORP), 26 août 1997 (1997-08-26)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention est relative à un procédé de régulation d'une machine tournante, en particulier une machine tournante asynchrone. Elle se rapporte également à un dispositif d'alimentation d'une telle machine.

Plus précisément, l'invention concerne un procédé de régulation capable d'asservir le couple électromagnétique de la machine, et incidemment le flux magnétique (rotorique ou statorique) de cette dernière, sur des valeurs de consigne correspondantes.

En effet, la commande de la vitesse d'une machine asynchrone est généralement effectuée en régulant la commande du couple électromagnétique de la machine.

Pour ce faire, les machines tournantes asynchrones sont généralement dotées d'un régulateur recevant en entrée, une valeur de consigne de couple électromagnétique et un ou plusieurs signaux échantillonnés représentatifs du couple électromagnétique de la machine élaborés à partir d'une mesure du courant statorique.

Pour asservir le couple électromagnétique de la machine sur la valeur de consigne de couple, le régulateur procède, à chaque instant d'échantillonnage, à une prédiction de la valeur du couple à l'instant d'échantillonnage suivant, et modifie en conséquence la tension de commande.

L'une des principales préoccupations pour la plupart des applications industrielles est l'augmentation des performances dynamiques de tels régulateurs, et en particulier l'augmentation de la dynamique de couple.

Pour que le système ait une bonne dynamique de couple, il est nécessaire de disposer d'une fréquence de découpage de l'onduleur grande devant la dynamique que l'on souhaite obtenir, faute de quoi la compensation est mal effectuée et les performances sont dégradées. En particulier on diminue le rendement de l'onduleur et du moteur et on augmente les pertes à évacuer.

Une solution à ce problème consiste à doter le système de composants électroniques à faible perte. Une telle solution est cependant inacceptable dans la mesure où elle contribue à augmenter considérablement le coût du dispositif d'alimentation de la machine.

Le but de l'invention est de palier les inconvénients précités.

Elle a donc pour objet un procédé de régulation d'une machine tournante alimentée par un onduleur de tension recevant, en entrée, une tension discrète de commande délivrée par un régulateur de manière à asservir le couple électromagnétique de la machine sur une valeur de consigne de couple, le régulateur recevant, en entrée, ladite valeur de consigne et au moins un signal échantillonné représentatif du couple électromagnétique de la machine et procédant, à chaque instant d'échantillonnage, à une prédiction de la valeur du couple à un instant d'échantillonnage suivant et à une modification consécutive de la tension de commande, caractérisé en ce que l'asservissement du couple électromagnétique comporte les étapes de :

- calcul préalable d'un modèle discret de l'ensemble constitué par la machine et l'onduleur établissant la variation du couple électromagnétique entre deux instants d'échantillonnage, sous la forme d'un premier terme correspondant à l'évolution libre du système à partir d'un état correspondant à l'instant d'échantillonnage et en l'absence de tension de commande et d'un terme correspondant à l'évolution du système sous l'action du signal de commande ; et
- modification de la tension de commande de manière à faire varier le couple électromagnétique de la machine d'une valeur correspondant à l'évolution libre du couple vers la valeur de consigne de couple.

Ainsi, l'amélioration des performances dynamiques est due à l'utilisation d'un régulateur amélioré, ce qui est moins coûteux que de prévoir des composants électrotechniques plus performants.

Le procédé de régulation selon l'invention peut en outre comporter une ou plusieurs des caractéristiques suivantes, prises isolément ou selon toutes les combinaisons techniquement possibles :

- au cours de l'asservissement du couple sur la valeur de consigne, on asservit le flux magnétique de la machine sur une valeur de consigne de flux reçue en entrée du régulateur en faisant varier la tension de commande de manière à modifier le flux magnétique d'une valeur correspondant à l'évolution libre du flux magnétique vers la valeur de consigne de flux ;
- la modification de la tension de commande est effectuée, à chaque instant d'échantillonnage, de manière à obtenir les valeurs de consigne de couple et de consigne de flux à l'instant d'échantillonnage suivant ;
- l'étape de modélisation du système consiste à discrétiser les équations d'état du système suivant :

$$\dot{X} = \left[A(\omega)\right]\mathrm{X} + \left[B\right]V_{ref} \,,$$

et

$$Y = h(X)$$

dans lesquelles :

X et Y représentent respectivement des vecteurs d'état et de sortie de la machine,
$[A(\omega)]$ représente une matrice d'état de la machine, évoluant en fonction de la vitesse $\omega$ de la machine,
$[B]$ représente une matrice d'entrée du système,
h représente une fonction de sortie du système, et
$V_{ref}$ représente la tension de commande ;

et à élaborer des caractéristiques $\Delta C$ et $\Delta\phi$ représentatives de la variation du couple et du flux à obtenir entre, d'une part, l'évolution libre pendant la période d'échantillonnage et, d'autre part, l'instant d'échantillonnage suivant, à partir de la modélisation discrétisée du système, définie selon les relations suivantes,

$$\Delta C = \left( \vec{\Psi}_{k+1}^{\,\circ} \wedge \vec{V}_{ref} \right) - (ad + bc) \left\| \vec{V}_{ref} \right\|^2$$

et

$$\Delta\phi = 2b <\vec{\phi}_{k+1}^{\,\circ}, \vec{V}_{ref}> - 2d \left( \vec{\phi}_{k+1}^{\,\circ} \wedge \vec{V}_{ref} \right) + (b^2 + d^2) \left\| \vec{V}_{ref} \right\|^2 ,$$

dans lesquelles,

$$\vec{\Psi}_{k+1}^{\,\circ} = \begin{bmatrix} a & -c \\ +c & a \end{bmatrix} \vec{\phi}_{k+1}^{\,\circ} - \begin{bmatrix} b & d \\ -d & b \end{bmatrix} \vec{I}_{k+1}^{\,\circ}$$

a, b, c, d représentant des coefficients de la matrice d'entrée discrétisée du système,

$\vec{I}_{k+1}^{\,o}$ désignant l'évolution libre prédite du vecteur de courant magnétique de la machine, pendant la période

d'échantillonnage, $\vec{\Phi}_{k+1}^{\,o}$ désignant l'évolution libre prédite du vecteur de flux magnétique de la machine, pendant la période d'échantillonnage et $\|\vec{V}_{ref}\|^2$ désignant le module au carré de la tension de commande ;

le régulateur étant élaboré de manière à déterminer la valeur de la tension de commande à appliquer en entrée de l'onduleur de manière à obtenir les variations de flux et de couple C et $\Delta\phi$.
- la tension de commande appliquée en entrée de l'onduleur est constituée par la tension correspondant à une énergie électrique minimale parmi les tensions de référence satisfaisant aux relations définissant lesdites caractéristiques représentatives de la variation du couple et du flux.

L'invention a également pour objet un dispositif d'alimentation d'une machine tournante, comprenant un onduleur de tension alimenté par une tension d'alimentation, un régulateur recevant, en entrée, une valeur de consigne de couple électromagnétique et au moins un signal échantillonné représentatif du couple électromagnétique de la machine et délivrant à l'onduleur une tension de commande adaptée pour asservir le couple électromagnétique de la machine sur une valeur de consigne de couple, par prédiction, à chaque instant d'échantillonnage, de la valeur de couple électromagnétique à l'instant d'échantillonnage suivant et modification consécutive de la tension de commande, caractérisé en ce que le régulateur comporte, stocké en mémoire, un modèle discret du système constitué par la machine et l'onduleur sous la forme d'un terme correspondant à l'évolution libre du système en l'absence de tension de commande et d'un terme correspondant à l'évolution du système sous l'action du signal de commande, entre deux instants d'échantillonnage, et en ce qu'il comporte en outre des moyens pour générer une tension de commande adaptée pour faire varier le couple électromagnétique d'une valeur correspondant à l'évolution libre du couple vers la valeur de consigne de couple.

Avantageusement le régulateur reçoit, en entrée, une valeur de consigne de flux magnétique et un signal échantillonné représentatif de la valeur du flux magnétique de la machine et comporte des moyens pour générer une tension de commande adaptée pour modifier le flux magnétique de la machine d'une valeur correspondant à l'évolution libre du flux magnétique vers la valeur de consigne de flux.

De préférence, les moyens pour générer la tension de commande sont adaptés pour générer la tension de commande, à chaque instant d'échantillonnage, de manière à obtenir, lors de l'instant d'échantillonnage suivant, lesdites valeurs de consigne de couple et de flux.

D'autres caractéristiques et avantages ressortiront de la description suivante, donnée uniquement à titre d'exemple, et faite en référence aux dessins annexés sur lesquels :

- la figure 1 est un schéma synoptique illustrant la constitution d'un dispositif d'alimentation d'une machine tournante conforme à l'invention ;
- la figure 2 montre des courbes illustrant la méthode de détermination de la tension de commande ; et
- la figure 3 montre des courbes permettant la détermination de la tension de commande en utilisant des approximations justifiées dans le cas d'une faible vitesse.

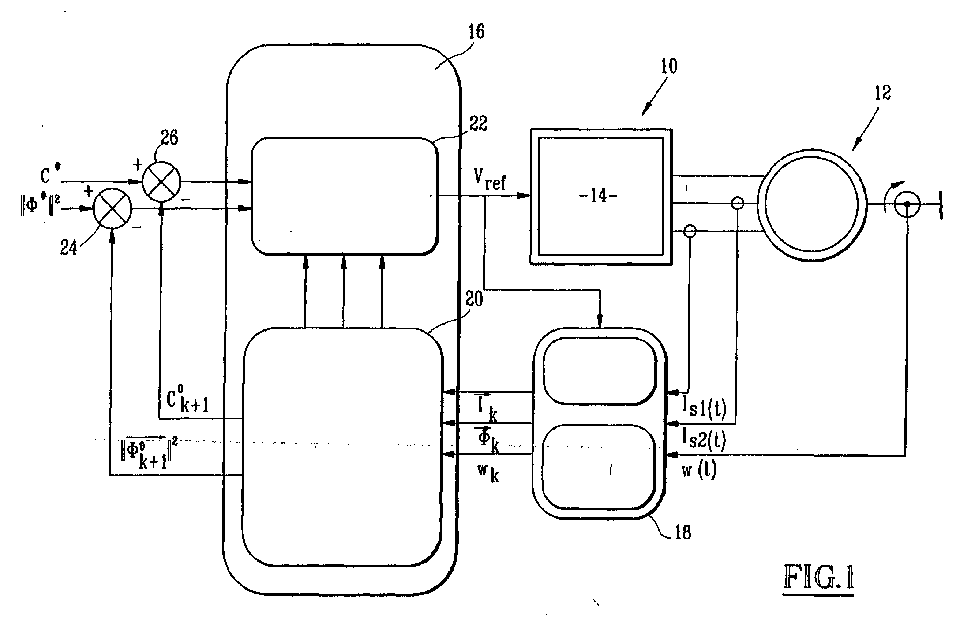

Sur la figure 1, on a représenté un dispositif 10 d'alimentation d'une machine tournante 12.

Sur cette figure, la machine tournante 12 a été schématisée sous la forme d'un moteur triphasé, constitué, par exemple, par le moteur de traction d'une machine ferroviaire électrique, d'un robot ou d'une machine outil.

Le dispositif d'alimentation 10, comporte, comme cela est classique, un onduleur de tension 14 alimentant le moteur 12 en tension alternative, lequel onduleur 14 est raccordé à une source d'alimentation en tension continue, par exemple une tension de l'ordre de 1500 à 3000 Volts, pour une application dans le domaine ferroviaire.

On notera que, alors que la machine tournante 12 peut être considérée comme un système continu, linéaire, l'onduleur 14 constitue un système discret non linéaire.

L'onduleur 14 est piloté par un régulateur 16. Ce régulateur 16 délivre à l'onduleur 14 une tension $V_{ref}$ de commande élaborée de manière à asservir le couple électromagnétique et, incidemment le flux magnétique de la machine 12, sur des valeurs de consigne de couple électromagnétique $C^*$ et de flux magnétique $\|\overrightarrow{\Phi^*}\|^2$ correspondant respectivement aux valeurs de couple électromagnétique et de flux magnétique à obtenir.

Comme on le voit sur la figure 1, le régulateur 16 reçoit également, en entrée, un ou plusieurs signaux échantillonnés $\overrightarrow{I}_k, \overrightarrow{\Phi}_k, \omega_k$ correspondant respectivement au vecteur du courant statorique, au vecteur du flux magnétique et à la vitesse mécanique du rotor de la machine 12, ces signaux, représentatifs du couple électromagnétique de la machine, étant élaborés par un observateur 18 à partir de signaux continus mesurés $I_{S1}(t)$, $I_{S2}(t)$ et $\omega(t)$ correspondant respectivement à des courants statoriques de phase et à un signal de mesure de la vitesse mécanique du rotor délivrés par des capteurs appropriés équipant la machine 12.

Comme cela est classique, pour asservir le couple électromagnétique et le flux magnétique de la machine 12 sur les valeurs de consigne $C^*$ et $\|\overrightarrow{\Phi^*}\|^2$ reçues en entrée, le régulateur 16 procède, à l'aide de moyens logiciels stockés en mémoire, à chaque instant d'échantillonnage, à une prédiction des valeurs de couple électromagnétique et de flux rotorique à l'instant d'échantillonnage suivant, et modifie en conséquence la tension de commande $V_{ref}$ de manière à obtenir les valeurs de couple et de flux imposées par les consignes.

On notera que, de préférence, le régulateur 16 est constitué par un régulateur de type "à réponse pile", c'est à dire qu'il modifie la tension de commande $V_{ref}$ de manière à atteindre les valeurs de consigne lors de l'instant d'échantillonnage suivant.

Pour ce faire, le régulateur 16 comporte un premier étage 20 dans lequel est stocké, en mémoire, un modèle discret du système constitué par la machine tournante 12 et l'onduleur 14 de manière à calculer l'évolution du système entre deux instants d'échantillonnage et un deuxième étage 22 de calcul de la tension de commande $V_{ref}$ à appliquer en entrée de l'onduleur 14, en fonction de l'évolution prédite du système par le premier étage, et des signaux de consigne $C^*$ et $\|\overrightarrow{\Phi^*}\|^2$ présentés en entrée du deuxième étage.

Dans la suite de la description, on va tout d'abord décrire la méthode de calcul du modèle discret du système constitué par la machine tournante 12 et l'onduleur 14, puis l'on va décrire la méthode de calcul de la tension de commande $V_{ref}$.

Comme mentionné précédemment, la machine tournante 12 est constituée par un système algébro-différentiel défini en temps continu, alors que l'onduleur de tension 14 est constitué par un système non linéaire.

Le système constitué par l'onduleur et la machine peut être défini par les équations d'état suivantes :

$$\dot{X} = \left[A(\omega)\right]X + [B]V_{ref} \qquad (1)$$

$$Y = h(X) \qquad (2)$$

Dans lesquelles,

- X et $\dot{X}$ désignent respectivement le vecteur d'état et la dérivée du vecteur d'état de la machine, définis par les composantes mesurées du courant statorique de la machine et les composantes de flux magnétique de la machine exprimées dans un repère à deux dimensions $\alpha$, $\beta$, fixe par rapport au stator,
X s'écrivant comme suit, en représentant l'état magnétique de la machine par le flux rotorique :

$$X = \begin{pmatrix} Is\alpha \\ Is\beta \\ \Phi r\alpha \\ \Phi r\beta \end{pmatrix}$$

- [A] représente une matrice d'état de la machine, évoluant en fonction de la vitesse $\omega$ de la machine et s'écrit

$$[A] = \begin{pmatrix} -\gamma & o & \alpha\beta & \beta\omega \\ o & -\gamma & -\beta\omega & \alpha\beta \\ \alpha L_m & o & -\alpha & -\omega \\ o & \alpha L_m & \omega & -\alpha \end{pmatrix}$$

- [B] représente une matrice d'entrée du système et s'écrit

$$[B] = \begin{pmatrix} \dfrac{1}{\sigma Ls} & o \\ o & \dfrac{1}{\sigma Ls} \\ o & o \\ o & o \end{pmatrix}$$

- $V_{ref}$ est exprimé dans le repère à deux dimension $\alpha$ et $\beta$ fixé au stator et a pour composantes :

$$V_{ref} = \begin{pmatrix} Vref\alpha \\ Vref\beta \end{pmatrix}$$

et h représente une fonction de sortie du système,

$$\text{avec } \sigma = 1 - \frac{L^2m}{LsLr} \ , \ \gamma = \frac{Rsr}{\sigma Ls} \ , \ \beta = \frac{Lm}{\sigma LsLr} \ , \ \alpha = \frac{Rr}{Lr}$$

$$\text{et avec } Rsr = Rs + Rr \left(\frac{Lm}{Lr}\right)^2$$

$R_s$ désignant la résistance du stator, $R_r$ étant la résistance du rotor, $L_m$ désignant l'inductance mutuelle, $L_s$ désignant l'inductance du stator, et Lr étant l'inductance du rotor.

De même, le vecteur de sortie Y ayant pour composantes le flux rotorique et le couple électromagnétique, et défini selon la relation (2) mentionnée précédemment, s'écrit

$$Y = \begin{pmatrix} \left\| \vec{\Phi}_r \right\|^2 \\ C \end{pmatrix} = \begin{pmatrix} \Phi_{r\alpha}^2 + \Phi_{r\beta}^2 \\ p\dfrac{Lm}{Lr}\left(\Phi_{r\alpha}I_{s\beta} - \Phi_{r\beta}I_{s\alpha}\right) \end{pmatrix}$$

dans laquelle p est le nombre de paires de pôles.

On notera que, dans ce qui précède, la tension de commande $V_{ref}$ peut être considérée comme constante entre deux périodes d'échantillonnage. Dès lors, le premier étage 20 du régulateur 16 est à même de procéder à une discrétisation des équations d'états mentionnées précédemment, à partir des relations suivantes :

$$X_{k+1} = \left[F(\omega_k)\right]X_k + [G] \, V_{ref} \qquad\qquad (3),$$

$$Y_k = h(X_k), \qquad\qquad (4)$$

avec :

$$[F] = e^{[A] \, T},$$

et

$$[G] = [A]^{-1}[e^{[A]T} - I][B]$$

dans lesquelles :

$X_{K+1}$ désigne le vecteur d'état discrétisé à l'instant (k+1) T ;
$X_k$ et $V_{ref}$ désignent respectivement le vecteur d'état du système et la tension de commande à l'instant kT ;
I désigne la matrice identité ;
$[F(\omega_K)]$ désigne la matrice d'état discrétisée,
[G] est la matrice d'entrée discrétisée et
h est la fonction de sortie discrétisée.

On notera que les relations (3) et (4) ci-dessus, qui permettent la discrétisation du système, prennent également en compte la nature discrète de l'onduleur, dans la mesure où, comme mentionné précédemment, ce dernier délivre une tension moyenne constante au cours d'une période d'échantillonnage.

Bien que l'onduleur délivre une tension dont la valeur moyenne est constante au cours d'une période d'échantillonnage, bien entendu, la fréquence de découpage de l'onduleur peut être supérieure à la fréquence d'échantillonnage.

Ainsi, bien que la tension délivrée par l'onduleur permette la régulation du couple et du flux de la machine tournante 12, il est possible d'agir sur la fréquence et la durée des paliers de la tension délivrée par l'onduleur, à chaque période d'échantillonnage, tout en conservant une valeur moyenne constante, de manière, par exemple, à respecter un contenu harmonique sur la période d'échantillonnage.

Le vecteur d'état X a pour composantes le vecteur de flux courant statorique et le vecteur de flux rotorique prédits de la machine, exprimés dans un repère à deux dimensions fixe par rapport au stator et s'exprime dès lors selon la relation suivante:

$$
\begin{pmatrix} \vec{I}_{k+1} \\ \vec{\Phi}_{k+1} \end{pmatrix} = \begin{pmatrix} F_{11} F_{12} \\ F_{21} F_{22} \end{pmatrix} \begin{pmatrix} \vec{I}_{k} \\ \vec{\Phi}_{k} \end{pmatrix} + \begin{pmatrix} G_1 + G_3 \\ G_2 + G_4 \end{pmatrix} \vec{V}_{ref} \tag{5}
$$

ou encore :

$$
\vec{I}_{k+1} = [F11]\vec{I}_k + [F12]\vec{\Phi}_k + [G1]\vec{V}_{ref} + [G3]\vec{V}_{ref}
$$

$$
\vec{\Phi}_{k+1} = [F21]\vec{I}_k + [F22]\vec{\Phi}_k + [G2]\vec{V}_{ref} + [G4]\vec{V}_{ref}
$$

avec :

$$
[G_1] = \begin{bmatrix} a & o \\ o & a \end{bmatrix},
$$

$$
[G_2] = \begin{bmatrix} b & o \\ o & b \end{bmatrix},
$$

$$
[G_3] = \begin{bmatrix} o & +c \\ -c & o \end{bmatrix},
$$

et

$$
[G_4] = \begin{bmatrix} o & -d \\ +d & o \end{bmatrix}
$$

Ainsi, le vecteur d'état prédit par le premier étage 20 du régulateur 16, ayant pour composante la valeur vecteur de courant statorique prédit $\vec{I}_{k+1}$ et du vecteur de flux rotorique prédit $\vec{\Phi}_{k-1}$ à l'instant (k+1)T comporte un premier terme dépendant uniquement de la tension de commande $V_{ref}$ à appliquer à l'onduleur 14 et un deuxième terme ne dépendant que de l'instant de départ kT, correspondant à l'évolution libre du système entre deux instants d'échantillonnage en l'absence de tension de commande appliquée.

Dès lors, le courant statorique et le flux rotorique prédit peuvent s'exprimer sous la forme

$$\vec{I_{k+1}} = \vec{I^o_{k+1}} + [G_1]\vec{V_{ref}} + [G_3]\vec{V_{ref}} \quad (6) \; ;$$

et

$$\vec{\Phi_{k+1}} = \vec{\Phi^o_{k+1}} + [G_2]\vec{V_{ref}} + [G_4]\vec{V_{ref}} \quad (7)$$

dans lesquelles $\vec{I}^o_{k+1}$ et $\vec{\Phi}^o_{k+1}$ et désignent respectivement l'évolution libre du courant statorique et l'évolution libre du flux rotorique à partir de l'instant kT, entre deux périodes d'échantillonnage.

Les équations qui viennent d'être décrites permettent, comme on le conçoit, de prédire l'état du système à l'instant (k+1)T, à partir de la tension de commande $V_{ref}$ pilotant l'onduleur 14 et de l'état du système à l'instant kT, en supposant la vitesse de la machine tournante constante, paramètre qui évolue lentement.

On notera toutefois que ces équations, qui définissent la valeur du courant statorique et du flux rotorique à l'instant (k+1)T ne permettent pas directement d'asservir le couple électromagnétique et le flux rotorique sur les valeurs de consigne imposées.

Toutefois, ces relations permettent au première étage 20 de calculer la valeur du couple prédit $C_{K+1}$, correspondant à la valeur du couple électromagnétique à l'instant d'échantillonnage suivant, à l'aide de la relation suivante :

$$C_{k+1} = K\left( \vec{\Phi_{k+1}} \wedge \vec{I_{k+1}} \right) \quad (8)$$

dans laquelle K désigne un terme dépendant uniquement des paramètres de la machine 12. -

De même, le module du flux rotorique prédit satisfait la relation suivante :

$$\left\| \vec{\Phi_{k+1}} \right\|^2 = <\vec{\Phi_{k+1}}, \vec{\Phi_{k+1}}> \quad (9)$$

En remplaçant les grandeurs prédites du courant et du flux dans les relations (8) et (9) précédentes on obtient :

$$C_{k+1} = C^o_{k+1} + K\left( \vec{\Psi}^o_{k+1} \wedge \vec{V_{ref}} \right) - K(ad+bc)\left\| \vec{V_{ref}} \right\|^2 \quad (10)$$

avec :

$$\vec{\Psi}^o_{k+1} = \begin{bmatrix} a & -c \\ +c & a \end{bmatrix} \vec{\Phi}^o_{k+1} - \begin{bmatrix} b & d \\ -d & b \end{bmatrix} \vec{I}^o_{k+1}$$

de même, le module du flux rotorique prédit satisfait à la relation suivante :

$$\left\| \vec{\Phi_{k+1}} \right\|^2 = \left\| \vec{\Phi}^o_{k+1} \right\|^2 + 2b <\vec{\Phi}^o_{k+1}, \vec{V_{ref}}> - 2d(\vec{\Phi}^o_{k+1} \wedge \vec{V_{ref}}) + (b^2+d^2)\left\| \vec{V_{ref}} \right\|^2 \quad (11)$$

On conçoit donc que, à partir de la modélisation du système constitué par la machine tournante 12 et l'onduleur de tension 14 mémorisée dans le premier étage 20 du régulateur 16, ce dernier est en mesure de calculer à chaque instant d'échantillonnage kT, la prédiction de la valeur du couple électromagnétique et du flux rotorique de la machine tournante 12, à l'instant d'échantillonnage (k+1)T suivant.

Ces valeurs prédites $C_{K+1}$ et $\|\vec{\Phi}_{k+1}\|^2$ comportent un premier terme correspondant à l'évolution libre du système $C_{K+1}{}^0$ et $\left\|\vec{\Phi}_{k+1}^{\;o}\right\|^2$ à partir de la valeur de couple électromagnétique et de flux rotorique à l'instant kT, en l'absence de tension de commande $V_{ref}$, et un deuxième terme dépendant de la tension de commande $V_{ref}$ appliquée en entrée de l'onduleur de tension 14.

On notera que les évolutions libres $C_{K+1}{}^0$ et $\left\|\vec{\Phi}_{k+1}^{\;o}\right\|^2$ peuvent être déterminées de façon relativement précise dans la mesure où les caractéristiques de la machine tournante 12 et de l'onduleur 14 sont connues précisément.

Dès lors, pour asservir le couple électromagnétique et le flux sur les valeurs de consigne correspondante, il convient simplement de générer une tension de commande $V_{ref}$ permettant de modifier les caractéristiques de fonctionnement du moteur 12 de manière à faire évoluer le couple électromagnétique et le flux rotorique, depuis la valeur correspondant respectivement à l'évolution libre du couple et à l'évolution libre du flux vers les valeurs de consigne à obtenir.

En d'autres termes, il convient de déterminer la tension de commande $V_{ref}$ satisfaisant aux relations (10) et (11) mentionnées précédemment.

Plus particulièrement, il convient de déterminer la tension de commande $V_{ref}$ satisfaisant aux relations ci-dessous

$$\Delta C = \left(\vec{\Psi}_{k+1}^{\;o} \Lambda \vec{V}_{ref}\right) - (ad + bc)\left\|\vec{V}_{ref}\right\|^2 \tag{12}$$

$$\Delta\Phi = 2b <\vec{\Phi}_{k+1}^{\;o}, \vec{V}_{ref}> -2d\left(\vec{\Phi}_{k+1}^{\;o} \Lambda \vec{V}_{ref}\right) + \left(b^2 + d^2\right)\left\|\vec{V}_{ref}\right\| \tag{13}$$

avec

$$\Delta C = \frac{1}{K}\left(C_{k+1} - C_{k+1}^{\;o}\right)$$

et

$$\Delta\Phi = \left\|\vec{\Phi}_{k+1}\right\|^2 - \left\|\vec{\Phi}_{k+1}^{\;o}\right\|^2 ,$$

soit, sous forme développée, dans le repère $\alpha$, $\beta$ à deux dimensions :

$$\Delta C = \Psi_{(k+1)\alpha}^{\;o} V_\beta - \Psi_{(k+1)\beta}^{\;o} V_\alpha - (ad + bc)\left(V_{ref\alpha}^{\;2} + V_{ref\beta}^{\;2}\right) \tag{14}$$

$$\Delta\Phi = 2b\left[\Phi_{(k+1)\alpha}{}^{o}V_{ref\alpha} + \Phi_{(k+1)\beta}{}^{o}V_{ref\beta}\right] - 2d\left[\Phi_{(k+1)\alpha}{}^{o}V_{ref\beta} - \Phi_{(k+1)\beta}{}^{o}V_{ref\alpha}\right] + \left(b^2 + d^2\right)\left(V_{ref\alpha}{}^2 + V_{ref\beta}{}^2\right)$$

$$(15)$$

Comme on le voit sur la figure 1, pour procéder à ce calcul, le deuxième étage de calcul 22 du régulateur 16 reçoit, en provenance du première étage 20, la valeur de l'évolution libre du courant statorique et du flux rotorique de la machine ainsi que les composantes de la matrice d'entrée discrétisées G($\omega_K$).

Comme on le conçoit, et en posant :

$$\lambda_1 = -(ad+bc)$$

et

$$\vec{M}_{(k+1)1}{}^{o} = \begin{bmatrix} m_1\ \alpha \\ m_1\ \beta \end{bmatrix} = \begin{pmatrix} o & \dfrac{1}{2\lambda_1} \\ \dfrac{-1}{2\lambda_1} & o \end{pmatrix} \vec{\Psi}_{k+1}{}^{o},$$

on obtient:

$$\left(V_{ref\alpha} - m_{1\alpha}\right)^2 + \left(V_{ref\beta} - m_{1\beta}\right)^2 = \frac{\Delta C}{\lambda 1} + \left\| \vec{M}_{(k+1)1}{}^{o} \right\|^2 \qquad (16)$$

De même, en posant :

$$\lambda_2 = b^2 + d^2,$$

et

$$\vec{M}_{(k+1)2}{}^{o} = \begin{pmatrix} m_2\alpha \\ m_2\beta \end{pmatrix} = \begin{pmatrix} -b/\lambda_2 & -d/\lambda_2 \\ d/\lambda_2 & -b/\lambda_2 \end{pmatrix} \vec{\Phi}_{k+1}{}^{o},$$

on obtient, à partir de la relation (15) mentionnée précédemment :

$$\left(V_{ref\alpha} - m_2\alpha\right)^2 + \left(V_{ref\beta} - m_2\beta\right)^2 = \frac{\Delta\Phi}{\lambda 2} + \left\| \vec{M}_{(k+1)2}{}^{o} \right\|^2 \qquad (17)$$

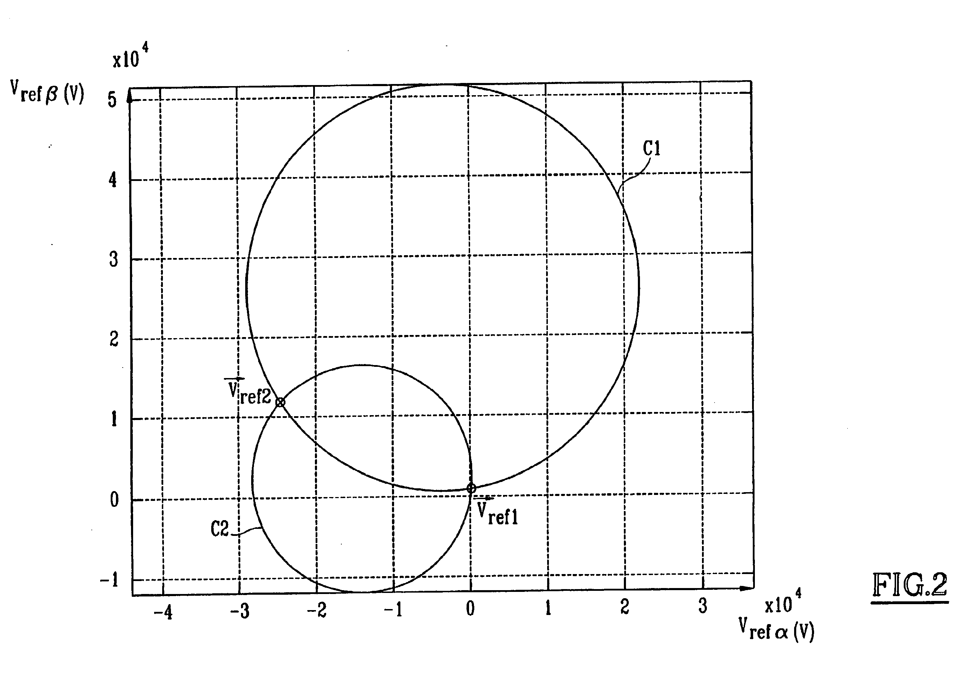

Ainsi, et comme on le voit sur la figure 2, la tension de commande discrète exacte $V_{ref}$, solution du système d'équation (14) et (15) est constitué par l'intersection de deux cercles correspondant respectivement aux relations (16) et (17) mentionnées ci-dessus, à savoir un premier cercle C1 de centre $M_1 = \begin{pmatrix} m_1\alpha \\ m_1\beta \end{pmatrix}$ de rayon

$$R_1 = \sqrt{\frac{\Delta C}{\lambda 1} + \left\| \vec{M}_{(k+1)1}^{\ o} \right\|^2}$$ , et un cercle C$_2$ de centre $M_2 = \begin{pmatrix} m2\alpha \\ m2\beta \end{pmatrix}$ et de rayon $R_2 = \sqrt{\frac{\Delta \Phi}{\lambda 2} + \left\| \vec{M}_{(k+1)2}^{\ o} \right\|^2}$ .

On notera que les centres M1et M2 des cercles C1 et C2 se déplacent respectivement sur la trajectoire des l'évolutions libres $\vec{\Psi}_{k+1}^{\ o}$ et $\vec{\Phi}_{k+1}^{\ o}$.

Dans les cas où les cercles C1 et C2 se coupent en deux points distincts $\vec{V}_{ref1}$ et $\vec{V}_{ref2}$, le deuxième étage de calcul 22 sélectionne la tension de référence $V_{ref}$ correspondant à une énergie électrique minimale.

On notera par ailleurs que les coefficients c et d de la matrice d'entrée discrétisée [G] dépendent de la vitesse mécanique ω et de la période d'échantillonnage T à la puissance 3 et plus. Par conséquent, pour une vitesse mécanique ω faible, et dans la mesure où la période d'échantillonnage T est généralement petite, ces coefficients peuvent être négligés. Dès lors, la relation (14) mentionnée précédemment peut s'écrire de la façon suivant :

$$\Delta C = \Psi_{(k+1)\alpha}^{\ o} V_\beta - \Psi_{(k+1)\beta}^{\ o} V_\alpha \tag{18}$$

Ainsi, dans ce cas, la tension de commande $V_{ref}$ à appliquer en entrée de l'onduleur 14 est constitué par l'intersection du cercle C2 correspondant à la relation (17) mentionnée précédemment et par une droite correspondante à la relation (18).

Selon une autre approximation, on peut négliger le terme b$^2$ dans la mesure où le coefficient b de la matrice d'entrée discrétisée [G] dépend de la période d'échantillonnage par un ordre au moins égal à deux.

Ainsi, en conservant l'approximation faite précédemment, c'est à dire avec c et d nuls, la relation (15) devient :

$$\Delta \Phi = 2b \left[ \Phi_{(k+1)\alpha}^{\ o} V_{ref\alpha} + \Phi_{(k+1)\beta}^{\ o} V_{ref\beta} \right] \tag{19}$$

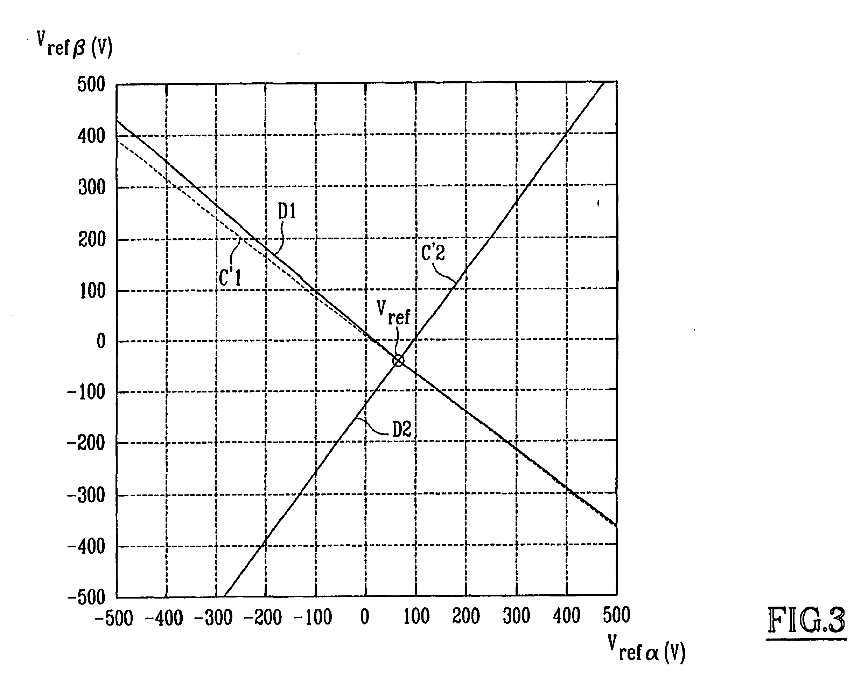

Dans ce cas, avec ces approximations, et comme cela est visible sur la figure 3, la tension de commande satisfaisant aux relations (18) et (19) ci-dessus correspond à l'intersection de deux droites D1 et D2 illustrant la tension de commande à appliquer pour obtenir le couple électromagnétique et le flux rotorique désirés entre deux périodes d'échantillonnage, en fonction des composantes Vrefα et Vrefβ de la tension de référence, dans le repère fixe par rapport au stator.

Sur cette figure 3, on a représenté, en pointillé, la solution exacte, c'est à dire l'intersection de deux cercles C'1 et C'2, lequel est confondu à D2, obtenus sans négliger les termes b$^2$, c et d.

On voit que les approximations faites pour calculer la tension de commande Vref n'engendrent sensiblement pas de variation dans cette tension pour un domaine de vitesses faibles.

Une autre approximation consiste à ne négliger que les termes (ad+bc) et (b$^2$+d$^2$), dépendant de la période d'échantillonnage par un ordre au moins égal à 4.

Une telle approximation reste valable pour des vitesses plus élevées.

Dans ce cas, l'équation (15) devient :

$$\Delta \Phi = 2b \left[ \Phi_{(k+1)\alpha}^{\ o} V_{ref\alpha} + \Phi_{(k+1)\beta}^{\ o} V_{ref\beta} \right] - 2d \left[ \Phi_{(k+1)\alpha}^{\ o} V_{ref\beta} - \Phi_{(k+1)\beta}^{\ o} V_{ref\alpha} \right] \tag{20}$$

La tension de commande satisfaisant alors aux relations (18) et (20) correspond également à l'intersection de deux droites.

On conçoit que l'invention qui vient d'être décrite utilisant un régulateur comportant, stocké en mémoire, un modèle discret de la machine 12 et de l'onduleur 14, permet, à l'aide d'algorithmes de calcul appropriés, d'une part, de calculer les valeurs de couple et de flux à ajouter à l'évolution libre du couple et du flux entre deux périodes d'échantillonnage et, d'autre part, de générer la tension de commande $V_{ref}$ pilotant l'onduleur de matière à obtenir les valeurs de consignes imposées.

Pratiquement, et comme cela est visible sur la figure 1, le premier étage fournit, à la borne inverseuse de comparateurs 24 et 26, la valeur des évolutions libres qui sont soustraites aux valeurs de consignes correspondantes, le deuxième étage générant, à partir de la sortie de ces comparateurs, la version de commande $V_{ref}$.

**Revendications**

1.  Procédé de régulation d'une machine tournante (12) alimentée par un onduleur de tension (14) recevant, en entrée, une tension discrète ($V_{ref}$) de commande délivrée par un régulateur (16) de manière à asservir le couple électromagnétique de la machine sur une valeur de consigne de couple (C*), le régulateur recevant, en entrée, ladite valeur de consigne (C*) et au moins un signal échantillonné ($\vec{I}_k$, $\vec{\Phi}_k$, $\omega_k$) représentatif du couple électromagnétique de la machine et procédant, à chaque instant d'échantillonnage, à une prédiction de la valeur du couple à un instant d'échantillonnage suivant et à une modification consécutive de la tension de commande ($V_{ref}$), **caractérisé en ce que** l'asservissement du couple électromagnétique comporte les étapes de :

    - calcul préalable d'un modèle discret de l'ensemble constitué par la machine (12) et l'onduleur (14) établissant la variation du couple électromagnétique entre deux instants d'échantillonnage, sous la forme d'un premier terme correspondant à l'évolution libre du système à partir d'un état correspondant à l'instant d'échantillonnage et en l'absence de tension de commande et d'un terme correspondant à l'évolution du système sous l'action du signal de commande ; et
    - modification de la tension de commande ($V_{ref}$) de manière à faire varier le couple électromagnétique de la machine (12) d'une valeur correspondant à l'évolution libre du couple vers la valeur de consigne de couple.

2.  Procédé selon la revendication 1, **caractérisé en ce qu'**au cours de l'asservissement du couple sur la valeur de consigne (C*), on asservit le flux magnétique de la machine sur une valeur de consigne de flux ($\|\vec{\Phi^*}\|^2$) reçue en entrée du régulateur (16), en agissant sur la tension de commande ($V_{ref}$) de manière à faire varier le flux magnétique d'une valeur correspondant à l'évolution libre du flux magnétique vers la valeur de consigne de flux.

3.  Procédé selon la revendication 2, **caractérisé en ce que** la modification de la tension de commande est effectuée, à chaque instant d'échantillonnage, de manière à obtenir les valeurs de consigne de couple et de consigne de flux à l'instant d'échantillonnage suivant.

4.  Procédé selon la revendication 3, **caractérisé en ce que** l'étape de modélisation du système consiste à discrétiser les équations d'état du système suivant :

$$\dot{X} = [A(\omega)]X + [B]V_{ref},$$

    et

$$Y = h(X)$$

    dans lesquelles :

    X et Y représentent respectivement des vecteurs d'état et de sortie de la machine,
    $[A(\omega)]$ représente une matrice d'état de la machine, évoluant en fonction de la vitesse $\omega$ de la machine,
    [B] représente une matrice d'entrée du système,
    h représente une fonction de sortie du système, et
    $V_{ref}$ représente la tension de commande;

    et à élaborer des caractéristiques $\Delta C$ et $\Delta\phi$ représentatives de la variation du couple et du flux à obtenir entre, d'une part, l'évolution libre pendant la période d'échantillonnage et, d'autre part, l'instant d'échantillonnage suivant, à partir de la modélisation discrétisée du système, définie selon les relations suivantes :

$$\Delta C = \left( \vec{\Psi}^{\,o}_{k+1} \wedge \vec{V}_{ref} \right) - (ad + bc)\left\| \vec{V}_{ref} \right\|^2$$

et

$$\Delta\phi = 2b < \vec{\phi}^{\,o}_{k+1}, \vec{V}_{ref} > -2d\left( \vec{\phi}^{\,o}_{k+1} \wedge \vec{V}_{ref} \right) + (b^2 + d^2)\left\| \vec{V}_{ref} \right\|^2 ,$$

dans lesquelles,

$$\vec{\Psi}^{\,o}_{k+1} = \begin{bmatrix} a & -c \\ +c & a \end{bmatrix} \vec{\phi}^{\,o}_{k+1} - \begin{bmatrix} b & d \\ -d & b \end{bmatrix} \vec{I}^{\,o}_{k+1}$$

a, b, c, d représentant des coefficients de la matrice d'entrée discrétisée du système,

$\vec{I}^{\,o}_{k+1}$ désignant l'évolution libre prédite du vecteur de courant statorique, pendant la période d'échantillonnage,

$\vec{\Phi}^{\,o}_{k+1}$ désignant l'évolution libre prédite du vecteur de flux magnétique de la machine, pendant la période

d'échantillonnage et $\|\vec{V}_{ref}\|^2$ désignant le module au carré de la tension de commande ;

le régulateur étant élaboré de manière à déterminer la valeur de la tension de commande à appliquer en entrée de l'onduleur de manière à obtenir les variations de flux et de couple C et $\Delta\phi$.

5. Procédé selon la revendication 4, **caractérisé en ce que** la tension de commande appliquée en entrée de l'onduleur (14) est constituée par la tension correspondant à une énergie électrique minimale parmi les tensions de référence satisfaisant aux relations définissant lesdites caractéristiques représentatives de la variation du couple et du flux.

6. Dispositif d'alimentation d'une machine tournante (12) comprenant un onduleur (14) de tension alimenté par une tension d'alimentation, un régulateur (16) recevant, en entrée, une valeur de consigne de couple électromagnétique (C*) et au moins un signal échantillonné ($\vec{I}_k, \vec{\Phi}_k, \omega_k$) représentatif du couple électromagnétique de la machine (12) et délivrant à l'onduleur (14) une tension de commande ($V_{ref}$) adaptée pour asservir le couple électromagnétique de la machine sur la valeur de consigne de couple (C*), par prédiction, à chaque instant d'échantillonnage, de la valeur de couple électromagnétique à l'instant d'échantillonnage suivant et modification consécutive de la tension de commande, **caractérisé en ce que** le régulateur (16) comporte, stocké en mémoire, un modèle discret du système constitué par la machine (12) et l'onduleur (14) sous la forme d'un terme correspondant à l'évolution libre du système en l'absence de tension de commande et d'un terme correspondant à l'évolution du système sous l'action du signal de commande, entre deux instants d'échantillonnage, et **en ce qu'**il comporte en outre des moyens (22) pour générer une tension de commande adaptée pour faire varier le couple électromagnétique d'une valeur correspondant à l'évolution libre du couple vers la valeur de consigne de couple.

7. Dispositif d'alimentation selon la revendication 6, **caractérisé en ce que** le régulateur (16) reçoit, en entrée, une valeur de consigne de flux magnétique ($\|\vec{\Phi}^*\|^2$) et un signal échantillonné représentatif de la valeur du flux magnétique de la machine et comporte des moyens pour générer une tension de commande ($V_{ref}$) adaptée pour faire varier le flux magnétique de la machine d'une valeur correspondant à l'évolution libre du flux magnétique vers la valeur de consigne de flux.

8. Dispositif d'alimentation selon la revendication 7, **caractérisé en ce que** les moyens (22) pour générer la tension de commande sont adaptés pour générer la tension de commande, à chaque instant d'échantillonnage, de manière à obtenir, lors de l'instant d'échantillonnage suivant, lesdites valeurs de consigne de couple et de flux.

**Claims**

1. Process for the control of a rotating machine (12) powered by a voltage inverter (14) receiving as an input a discrete control voltage ($V_{ref}$) delivered by a regulator (16) in such a way as to subject the electromagnetic torque of the machine to a set torque value (C*), the regulator receiving the said set value (C*) and at least one sampled signal ($\vec{I}_k, \vec{\Phi}_k, \omega_k$) representing the electromagnetic torque of the machine as inputs and proceeding at each sampling instant to predict the value of the torque at a subsequent sampling instant and consecutively altering the control voltage ($V_{ref}$), **characterised in that** control of the electromagnetic torque comprises the stages of:

   - prior calculation of a discrete model of the assembly comprising the machine (12) and the inverter (14) establishing the change in electromagnetic torque between two sampling instants in the form of a first term corresponding to the free evolution of the system from a state corresponding to the sampling instant in the absence of a control voltage and a term corresponding to the evolution of the system through the effect of the control signal, and
   - changing the control voltage ($V_{ref}$) in such a way as to vary the electromagnetic torque of the machine (12) from a value corresponding to the free evolution of the torque to the set torque value.

2. Process according to claim 1, **characterised in that** during the course of subjecting the torque to the set value (C*), the magnetic flux of the machine is subjected to a set flux value ($\|\overline{\Phi}^*\|^2$) received as an input from the regulator (16) acting on the control voltage ($V_{ref}$) in such a way as to alter the magnetic flux from a value corresponding to the free evolution of the magnetic flux to the set value for the flux.

3. Process according to claim 2, **characterised in that** the change in the control voltage is made at each sampling instant in such a way as to obtain the set torque and set flux values at the next sampling instant.

4. Process according to claim 3, **characterised in that** the stage of modelling the system comprises creating discrete equations of state for the following system:

$$\dot{X} = [A(\omega)]X + [B]V_{ref},$$

and

$$Y = h(X)$$

in which:

   X and Y represent the state and output vectors of the machine respectively,
   $[A(\omega)]$ represents a state matrix for the machine changing in relation to the speed $\omega$ of the machine,
   [B] represents an input matrix for the system,
   h represents an output function for the system, and
   $V_{ref}$ represents the control voltage,

and processing the characteristics $\Delta C$ and $\Delta \varphi$ representing the changes in the torque and the flux which have to be obtained between free evolution during the sampling period and the next sampling instant on the basis of discrete modelling of the system defined in accordance with the following relationships:

$$\Delta C = \left( \vec{\Psi}_{k+1}{}^{\circ} \wedge \vec{V}_{ref} \right) - (ad + bc) \left\| \vec{V}_{ref} \right\|^2$$

and

$$\Delta\phi = 2b < \vec{\phi}_{k+1}{}^{\circ}, \vec{V}_{ref} > -2d \left( \vec{\phi}_{k+1}{}^{\circ} \wedge \vec{V}_{ref} \right) + (b^2 + d^2) \left\| \vec{V}_{ref} \right\|^2 \, ,$$

in which,

$$\vec{\Psi}_{k+1}{}^{\circ} = \begin{bmatrix} a & -c \\ +c & a \end{bmatrix} \vec{\phi}_{k+1}{}^{\circ} - \begin{bmatrix} b & d \\ -d & b \end{bmatrix} \vec{I}_{k+1}{}^{\circ}$$

a, b, c, d representing the coefficients for the discrete entry matrix for the system,

$\vec{I}_{k+1}{}^{\circ}$ : indicating the predicted free evolution of the stator current vector during the sampling period, $\vec{\Phi}_{k+1}{}^{\circ}$ indicating the free predicted evolution of the magnetic flux vector for the machine during the sampling period and $\|\vec{V}_{ref}\|^2$ indicating square modulus of the control voltage,

the regulator being processed in such a way as to determine the value of the control voltage to be applied to the input of the inverter so as to obtain the flux and torque changes $\Delta C$ and $\Delta\phi$.

5. Process according to claim 4, **characterised in that** the control voltage applied as an input to the inverter (14) comprises the voltage corresponding to a minimum electrical energy among the reference voltages which satisfy the relationships defining the said characteristics representing the changes in torque and flux.

6. Feed device for a rotating machine (12) comprising a voltage inverter (14) fed by a feed voltage, the regulator (16) receiving as an input a set value for the electromagnetic torque (C*) and at least one sample signal $(\vec{I}_k, \vec{\Phi}_k, \omega_k)$ representing the electromagnetic torque of the machine (12) and delivering to the inverter (14) a control voltage $(V_{ref})$ designed to subject the electromagnetic torque of the machine to the set value for the torque (C*) by predicting at each sampling instant the value of the electromagnetic torque at the next sampling instant and consecutively altering the control voltage, **characterised in that** the regulator (16) comprises stored in memory a discrete model of the system comprising the machine (12) and the inverter (14) in the form of a term corresponding to the free evolution of the system in the absence of a control voltage and a term con-esponding to the evolution of the system under the effect of the control signal between two sampling instants and that it further comprises means (22) to generate a control voltage designed to vary the electromagnetic torque from a value corresponding to free evolution of the torque to the set value for the torque.

7. Feed device according to claim 6, **characterised in that** the regulator (16) receives as an input a set value for the magnetic flux $(\|\vec{\Phi}^*\|^2)$ and a sampled signal representing the value of the magnetic flux in the machine and comprises means to generate a control voltage $(V_{ref})$ designed to change the magnetic flux in the machine from a value corresponding to the free evolution of the magnetic flux to the set value for the flux.

8. Feed device according to claim 7, **characterised in that** the means (22) for generating the control voltage are designed to generate the control voltage at each sampling instant in such a way as to obtain the said set values for the torque and flux at the next sampling instant.

**Patentansprüche**

1.  Ein Verfahren zum Regeln einer rotierenden Maschine (12), die durch einen Wechselrichter (14) gespeist wird, der an seinem Eingang eine diskrete Steuerspannung ($V_{ref}$) aufnimmt, die von einem Regler (16) so ausgegeben wird, daß das elektromagnetische Moment der Maschine auf einen Momentsollwert (C*) eingeregelt wird, wobei der Regler an seinem Eingang den genannten Sollwert (C*) und wenigstens ein Abtastsignal ($\vec{I}_k$, $\vec{\Phi}_k$, $\omega_k$) aufnimmt, der für das elektromagnetische Moment der Maschine repräsentativ ist, und zu jedem Abtastzeitpunkt einen Vorhersagewert für den Wert des Moments zu einen nachfolgenden Abtastzeitpunkt sowie eine anschließende Änderung der Steuerspannung ($V_{ref}$) liefert, **dadurch gekennzeichnet, daß** die Einregelung des elektromagnetischen Moments die folgenden Schritte umfaßt:

    - vorherige Berechnung eines diskreten Modells der Gesamtheit, die durch die Maschine (12) und den Wechselrichter (14) gebildet wird, das die Variation des elektromagnetischen Moments zwischen zwei Abtastzeitpunkten bestimmt, in der Form eines ersten Terms, der der freien Entwicklung des Systems aus einen dem Abtastzeitpunkt entsprechenden Zustand heraus und in Abwesenheit der Steuerspannung entspricht, und eines Terms, der der Entwicklung des Systems unter der Wirkung des Steuersignals entspricht; und
    - Modifizieren der Steuerspannung ($V_{ref}$) derart, daß sich das elektromagnetische Moment der Maschine (12) von einem Wert, der der freien Entwicklung des Moments entspricht, in Richtung auf den Momentsollwert ändert.

2.  Verfahren nach Anspruch 1, **dadurch gekennzeichnet, daß** während der Einregelung des Moments auf den Sollwert (C*) der magnetische Fluß der Maschine auf einen Fluß-Sollwert ($\|\vec{\Phi^*}\|^2$) eingeregelt wird, der am Eingang des Reglers (16) empfangen wird, durch Einwirkung auf die Steuerspannung ($V_{ref}$) derart, daß sich der magnetische Fluß von einem der freien Entwicklung des magnetischen Flusses entsprechenden Wert in Richtung auf den Fluß-Sollwert ändert.

3.  Verfahren nach Anspruch 2, **dadurch gekennzeichnet, daß** die Änderung der Steuerspannung zu jedem Abtastzeitpunkt so bewirkt wird, daß man die Moment- und Fluß sollwerte zum folgenden Abtastzeitpunkt erhält.

4.  Verfahren nach Anspruch 3, **dadurch gekennzeichnet, daß** der Schritt der Modellierung des Systems darin besteht, daß die folgenden Zustandsgleichungen des Systems diskretisiert werden:

$$\dot{X} = \left[ A(\omega) \right] X + \left[ B \right] V_{ref} \qquad ,$$

und

$$Y = h(X)$$

wobei:

X und Y den Zustandsvektor bzw. den Ausgangsvektor der Maschine repräsentieren
[$A(\omega)$] eine Zustandsmatrix der Maschine repräsentiert, die sich in Abhängigkeit von der Geschwindigkeit $\omega$ der Maschine entwickelt,
[B] eine Eingangsmatrix des Systems repräsentiert,
h eine Ausgangsfunktion des Systems repräsentiert und
$V_{ref}$ die Steuerspannung repräsentiert;

und daß die Kennlinien $\Delta C$ und $\triangle \Phi$ erstellt werden, die für die Variation des Moments und des Flusses repräsentativ sind, die sich zwischen der freien Entwicklung während der Abtastperiode einerseits und dem nächsten Abtastzeitpunkt andererseits ergibt, anhand der diskretisierten Modellierung des Systems, die gemäß den folgenden Beziehungen definiert ist:

$$\Delta C = \left( \vec{\Psi}_{k+1}^{o} \wedge \vec{V}_{ref} \right) - (ad + bc)\left\| \vec{V}_{ref} \right\|^2$$

und

$$\Delta \phi = 2b < \vec{\phi}_{k+1}^{o}, \vec{V}_{ref} > -2d\left( \vec{\phi}_{k+1}^{o} \wedge \vec{V}_{ref} \right) + (b^2 + d^2)\left\| \vec{V}_{ref} \right\|^2,$$

, und
wobei

$$\vec{\Psi}_{k+1}^{o} = \begin{bmatrix} a & -c \\ +c & a \end{bmatrix} \vec{\phi}_{k+1}^{o} - \begin{bmatrix} b & d \\ -d & b \end{bmatrix} \vec{I}_{k+1}$$

a, b, c, d Koeffizienten der diskretierten Eingangsmatrix des Systems repräsentieren,

$\vec{I}_{k+1}^{o}$ die freie Entwicklung während der Abtastperiode angibt, die durch den Vektor des Statorstroms vorhergesagt wird, $\vec{\Phi}_{k+1}^{o}$ die freie Entwicklung während der Abtastperiode angibt, die durch den Vektor des magnetischen Flusses der Maschine vorhergesagt wird, und $\|\vec{V}_{ref}\|^2$ das Betragsquadrat der Steuerspannung angibt;

wobei der Regler so ausgeführt wird, daß er den Wert der Steuerspannung bestimmt, die an den Eingang des Wechselrichters anzulegen ist, um die Änderungen des Flusses und des Moments ΔC und ΔΦ zu erhalten.

5. Verfahren nach Anspruch 4, **dadurch gekennzeichnet, daß** die an den Eingang des Wechselrichters (14) angelegte Steuerspannung durch die Spannung gebildet wird, die unter den Bezugsspannungen, die den Beziehungen genügen, die die genannten repräsentativen Kennlinien der Variation des Moments und des Flusses repräsentieren, einer minimalen Energie entspricht.

6. Vorrichtung zur Stromversorgung einer rotierenden Maschine (10) mit einem Wechselrichter (10), der mit einer Versorgungsspannung gespeist wird, einem Regler (16), der am Eingang einen Sollwert (C*) für das elektromagnetische Moment und wenigstens ein Abtastsignal ($\vec{I}_k$, $\vec{\Phi}_k$, $\omega_k$) empfängt, das für das elektromagnetische Moment der Maschine (12) repräsentativ ist, und an den Wechselrichter (14) eine Steuerspannung ($V_{ref}$) ausgibt, die dazu angepaßt ist, das elektromagnetische Moment der Maschine auf den Momentsollwert (C*) einzuregeln, durch Vorhersage, in jedem Abtastzeitpunkt, des Wertes des elektromagnetischen Moments in dem folgenden Abtastzeitpunkt und anschließende Modifikation der Steuerspannung, **dadurch gekennzeichnet, daß** der Regler (16), im Speicher abgelegt, ein diskretes Modell des durch die Maschine (12) und den Wechselrichter (14) gebildeten Systems aufweist, in der Form eines Terms, der der freien Entwicklung des Systems zwischen zwei Abtastzeitpunkten in Abwesenheit der Steuerspannung entspricht, und eines Terms, der der Entwicklung des Systems unter der Wirkung des Steuersignals entspricht, und daß er außerdem Mittel (22) zur Erzeugung einer Steuerspannung aufweist, die dazu angepaßt ist, das elektromagnetische Moment von einem der freien Entwicklung des Moments entsprechenden Wert in Richtung auf den Moment Sollwert zu verändern.

7. Vorrichtung nach Anspruch 6, **dadurch gekennzeichnet, daß** der Regler (16) am Eingang einen Sollwert ($\|\vec{\Phi}^*\|^2$) für den magnetischen Fluß und ein Abtastsignal aufnimmt, das für den Wert des magnetischen Flusses der Maschine repräsentativ ist, und Mittel zur Erzeugung einer Steuerspannung ($V_{ref}$) aufweist, die dazu angepaßt ist, den magnetischen Fluß der Maschine von einem der freien Entwicklung des magnetischen Flusses entsprechenden Wert in Richtung auf den Fluß-Sollwert zu verändern.

8. Vorrichtung nach Anspruch 7, **dadurch gekennzeichnet, daß** die Mittel (22) zur Erzeugung der Steuerspannung dazu ausgebildet sind, die Steuerspannung in jedem Abtastzeitpunkt so zu erzeugen, daß man bei dem folgenden Abtastzeitpunkt die genannten Sollwerte für das Moment und den Fluß erhält.

FIG.1

FIG.2

EP 1 045 514 B1

FIG.3

EP 1 045 514 B1